(19) Europäisches Patentamt
European Patent Office
Office européen des brevets

(11) Publication number: **0 545 108 A1**

(12) **EUROPEAN PATENT APPLICATION**

(21) Application number: **92119271.2**

(22) Date of filing: **11.11.92**

(51) Int. Cl.5: **C08G 63/16**, C08G 63/52, C09D 167/00, C09J 167/00, C09K 3/10, C09D 11/00, D01F 6/92

(30) Priority: **12.11.91 US 790875**

(43) Date of publication of application: **09.06.93 Bulletin 93/23**

(84) Designated Contracting States: **AT BE DE DK ES FR GB IT NL SE**

(71) Applicant: **UNION CARBIDE CHEMICALS & PLASTICS TECHNOLOGY CORPORATION**
**39 Old Ridgebury Road**
**Danbury, Connecticut 06817-0001(US)**

(72) Inventor: **Argyropoulos, John Nicholas**
**35 Michael Street**
**Scott Depot, West Virginia 25560(US)**
Inventor: **Busby, Molly I-Chen**
**130 Wispering Woods Road**
**Charleston, West Virginia 25303(US)**
Inventor: **Bone, Cheryl Casto**
**2416 Washington Avenue**
**St. Albans, West Virginia 25177(US)**
Inventor: **Koleske, Joseph Victor**
**1513 Brentwood Road**
**Charleston, West Virginia 25314(US)**

(74) Representative: **Brandes, Jürgen, Dr. et al**
**Wuesthoff & Wuesthoff Patent- und Rechtsanwälte Schweigerstrasse 2**
**W-8000 München 90 (DE)**

(54) **Polyesters of branched aliphatic diols.**

(57) This invention relates to polyesters prepared from liquid branched aliphatic diols with 8 or more carbon atoms and/or derivatives of said diols, and polyfunctional carboxylic acids and/or said anhydrides. The polyesters are useful in preparing coatings, adhesives, inks, and sealants that are cured with a variety of crosslinking agents.

EP 0 545 108 A1

## Brief Summary of the Invention

### Technical Field

This invention relates to polyesters prepared from certain liquid hydrocarbon diols and/or derivatives of said liquid hydrocarbon diols, and polyfunctional carboxylic acids and/or acid anhydrides. The polyesters are useful in preparing coatings, adhesives, inks, and sealants that are cured with a variety of crosslinking agents.

### Background of the Invention

Polyesters are well known in industry. They are formed when a glycol and a dicarboxylic acid or acid anhydride react by esterification and/or addition in the case of an anhydride to form long-chain molecules that are either hydroxyl or carboxyl terminated. Polyesters are usually designed so most terminal or end groups are hydroxyl in nature. Polyesters such as the poly(ethylene terephthalates) are useful in spinning fibers. Other polyesters such as poly(ethylene glycol/adipate), poly(diethylene glycol/adipate), poly-(butylene/adipate), poly(hexanediol/adipate) and similar polyesters are used as soft segments in polyurethanes, and as flexible components of coatings, inks, sealants, and adhesives that are cured with various crosslinking agents.

One well known deficiency of the polyesters is their tendency to hydrolyze when used. This leads to a shortened useful lifetime for products made from them, particularly when the polyester articles are exposed to acidic or basic conditions.

Another deficiency of polyesters and other molecules developed for coatings that will be formulated and applied as high solids coatings for a combination of environmental, ecological, and energy conservation reasons is a poor balance of properties. The requirement for high solids formulations is driven by both federal and state regulations. The lack of a good balance of properties is usually related to the low molecular weight oligomers/polymers that must be prepared and used to achieve the sufficiently low viscosity needed for formulated systems that are high solids in nature and that have a low volatile organic content. Thus, there is a need for low molecular weight polyesters and coatings derived from them that have a good balance of properties so that energy can be conserved through use of less diluent solvent and so that federal and state regulations as well as community standards can be met.

Polyesters that would have improved water, acid, and other chemical resistance over those presently known would be highly desirable products for the preparation of hydrolytic resistant coatings, inks, adhesives, and sealants. Features such as higher solids with balanced properties and low temperature cure features are highly desirable characteristics in coatings currently needed and for the future. Particularly desirable would be acid resistant coatings prepared from polyesters, since they would be important components in acid-rain resistant coatings. Such coatings are useful as automotive clear coatings that are used to cover color coats in what is known as clear coat/color coat systems as well as in other end uses including outdoor signs, functional and decorative coatings for metal and plastics, as for example in outdoor signs, coatings for electronic parts, and similar end uses.

U.S.S.R. 376,349, Chemical Abstracts 79, 41899z (1973), and Osnov. Organ. Sintex i Neftekhimiya, Leningrad, (11), 52-55 (1979), Chemical Abstracts 92, 215204e (1980), describe preparation of 2,4-diethyl-3-propyl-1,5-pentanediol by hydrogenation of a mixture of twelve-carbon lactones at 80-130 °C in an alcohol medium at a pressure of 100-300 atmospheres of hydrogen and in the presence of a copper-chromium catalyst (1980). U.S.S.R. 584,018, Chemical Abstracts 88, 62910x (1978), describes unsaturated polyesters that have been prepared from 2,4-diethyl-3-propyl-1,5-pentanediol, triols, maleic anhydride, and modifying acids, and these were found to have improved solubility and compatibility with styrene.

### Disclosure of the Invention

It has been discovered that polyesters of various molecular weights and/or viscosities can be prepared from certain liquid hydrocarbon diols and/or derivatives of said liquid hydrocarbon diols, polyfunctional carboxylic acids and/or acid anhydrides, and optionally other polyols. The liquid hydrocarbon diols are comprised of primary hydroxyl groups and 8 or more carbon atoms in which the primary hydroxyl groups are separated by 4 or more carbon atoms linearly arranged and in which at least one of said carbon atoms linearly arranged is a disubstituted carbon atom or at least 2 of said carbon atoms linearly arranged are monosubstituted carbon atoms, said liquid hydrocarbon diol existing as a liquid at a temperature of 35 °C or less. The polyesters of this invention include both saturated and unsaturated polyesters. For unsaturated

polyesters, the liquid hydrocarbon diol is other than 2,4-diethyl-3-propyl-1,5-pentanediol.

This invention also relates to a process for preparing polyesters which comprises condensing a liquid hydrocarbon diol comprised of primary hydroxyl groups and 8 or more carbon atoms in which the primary hydroxyl groups are separated by 4 or more carbon atoms linearly arranged and in which at least one of said carbon atoms linearly arranged is a disubstituted carbon atom or at least 2 of said carbon atoms linearly arranged are monosubstituted carbon atoms, said liquid hydrocarbon diol existing as a liquid at a temperature of 35°C or less, and/or a derivative of said liquid hydrocarbon diol, provided when said polyester is an unsaturated polyester, then said liquid hydrocarbon diol is other than 2,4-diethyl-3-propyl-1,5-pentanediol, with a polyfunctional carboxylic acid and/or an acid anhydride and optionally other polyols to form said polyester.

The particular liquid hydrocarbon diols and derivatives used have the characteristics of hydrophobicity, nonhydrolyzability, and lack of chemical attack and these characteristics are carried through to the polyester and to cross linked coatings or other articles made from them. A number of the polyesters described herein will contain asymmetric carbon atoms due to the particular diols employed in their manufacture. Such polyesters will have the special property of optical activity which makes them useful as frequency doublers of laser beams and the like. The polyesters of this invention are useful in the preparation of polyurethane foams and elastomers, fibers, coatings, adhesives, inks, sealants that are cured with various curing agents, as well as in other end uses.

This invention overcomes many of the disadvantages of conventional polyester resins by making unique polyesters that have improved water, acid, and other resistance over those presently known and imparting this resistance to products made from them such as coatings, inks, adhesives, sealants, fibers, polyurethane foams and elastomers, and the like.

## Detailed Description

This invention is concerned with unique polyesters and items prepared from them. The polyesters are prepared by condensing a liquid hydrocarbon diol comprised of primary hydroxyl groups and 8 or more carbon atoms in which the primary hydroxyl groups are separated by 4 or more carbon atoms linearly arranged and in which at least one of said carbon atoms linearly arranged is a disubstituted carbon atom or at least 2 of said carbon atoms linearly arranged are monosubstituted carbon atoms, said liquid hydrocarbon diol existing as a liquid at a temperature of 35°C or less, and/or a derivative of said liquid hydrocarbon diol, with a polyfunctional carboxylic acid and/or an acid anhydride to form an essentially hydroxyl-terminated polyester product.

The preferred liquid hydrocarbon diols for use in this invention are represented by the formula:

HO - R' - OH

wherein R' is a substituted hydrocarbon residue having 8 or more carbon atoms in which the primary hydroxyl groups are separated by 4 or more carbon atoms linearly arranged and in which at least one of said carbon atoms linearly arranged is a disubstituted carbon atom or at least 2 of said carbon atoms linearly arranged are monosubstituted carbon atoms, said liquid hydrocarbon diol existing as a liquid at a temperature of 35°C or less.

Other preferred liquid hydrocarbon diols for use in this invention are represented by the formula:

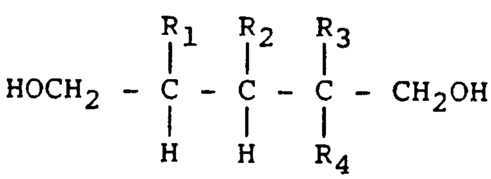

(I)

wherein $R_1$ is hydrogen or linear or branched alkyl having from 1 to 3 carbon atoms, and $R_2$, $R_3$ and $R_4$ are the same or different and are hydrogen or linear or branched alkyl having from 1 to 4 carbon atoms, said liquid hydrocarbon diol existing as a liquid at a temperature of 35°C or less; provided (a) at least 2 of $R_1$, $R_2$, $R_3$ and $R_4$ are other than hydrogen; (b) the total number of carbon atoms in $R_1$, $R_2$, $R_3$ and $R_4$ together is 5 or more except as follows: (i) when $R_2$ is ethyl and one of $R_1$, $R_3$ and $R_4$ is methyl, then the remaining 2 of $R_1$, $R_3$ and $R_4$ can be hydrogen; (ii) when $R_3$ and $R_4$ are independently methyl and propyl, then $R_1$

and $R_2$ can be hydrogen; and (iii) when $R_1$ is methyl and $R_2$ is ethyl and one of $R_3$ and $R_4$ is methyl, then the remaining $R_3$ or $R_4$ can be hydrogen; (c) when the total number of carbon atoms in $R_1$ and $R_2$ is 4 or more, then the total number of carbon atoms in $R_2$ is 3 or less except when $R_1$ is propyl and $R_3$ and $R_4$ are hydrogen, then $R_2$ can be butyl; and (d) when $R_1$ is ethyl and $R_2$ is propyl, then $R_3$ is other than ethyl.

The liquid hydrocarbon diols useful in this invention, for example, the liquid 1,5-pentanediols represented by Formula I above, can be prepared by a process comprising:

(a) contacting a substituted vinyl ether with a substituted or unsubstituted acrolein to form a substituted 3,4-dihydropyran;

(b) contacting the substituted 3,4-dihydropyran with an acid catalyst to form a substituted dialdehyde; and

(c) hydrogenating the substituted dialdehyde in the presence of a catalyst to form a liquid hydrocarbon diol represented by Formula I above.

More particularly, the liquid 1,5-pentanediols represented by Formula I above can be prepared by reacting acrolein or substituted acrolein with a substituted vinyl ether as follows:

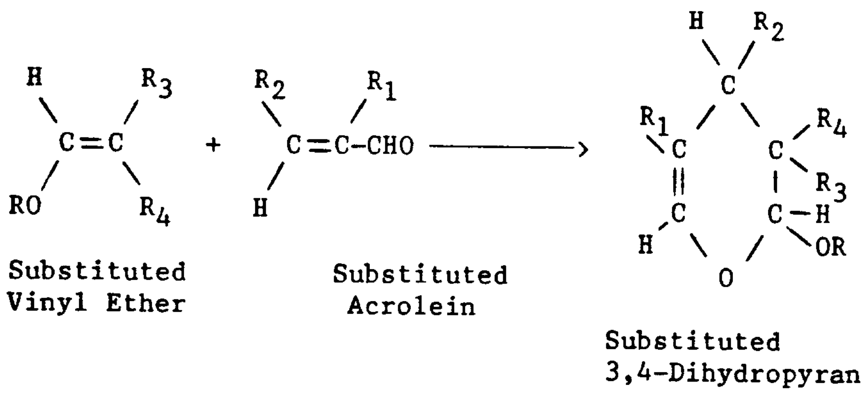

Substituted Vinyl Ether

Substituted Acrolein

Substituted 3,4-Dihydropyran

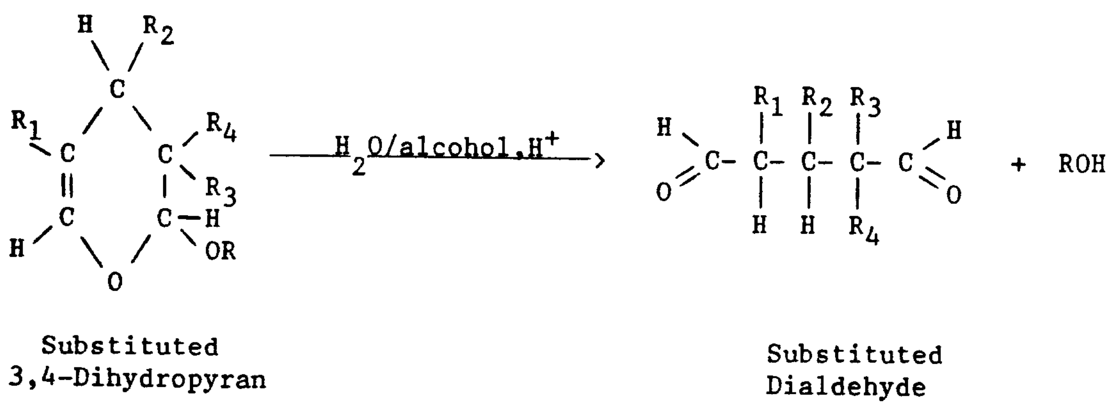


Substituted 3,4-Dihydropyran

Substituted Dialdehyde

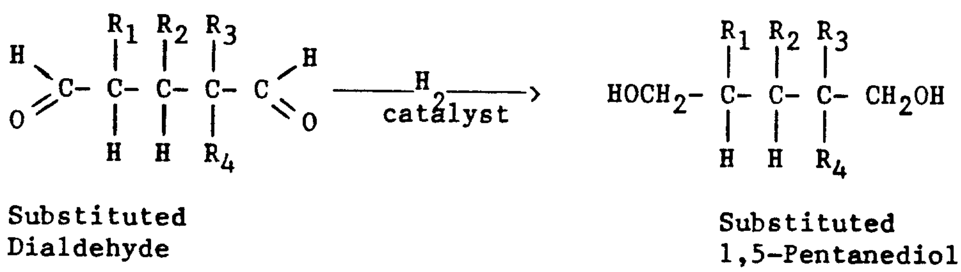


Substituted Dialdehyde

Substituted 1,5-Pentanediol

wherein $R_1$, $R_2$, $R_3$ and $R_4$ are as defined above and R is a substituted or unsubstituted hydrocarbon residue, preferably a linear or branched alkyl having from 1 to about 8 carbon atoms.

Illustrative of suitable substituted vinyl ethers useful in preparing the liquid hydrocarbon diols include, among others, alkyl vinyl ethers such as methyl vinyl ether; methyl (2-methyl vinyl) ether which has the structure:

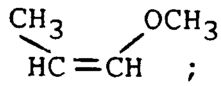
;

methyl (2-ethyl vinyl) ether, which has the structure:

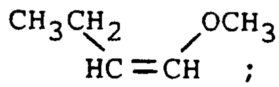
;

methyl (2,2-dimethyl vinyl) ether; methyl (2-methyl, 2-propyl vinyl) ether; methyl (2-butyl, 2-methyl vinyl) ether; ethyl vinyl ether; ethyl (2-methyl vinyl); ethyl (2-ethyl vinyl) ether; ethyl (2,2-dimethyl vinyl) ether; ethyl (2-methyl, 2-propyl vinyl) ether; ethyl (2-butyl, 2-methyl vinyl) ether; n-propyl and i-propyl vinyl ethers; butyl vinyl ethers such as n-butyl vinyl ether, s-butyl vinyl ether, i-butyl vinyl ether, and t-butyl vinyl ether; amyl vinyl ethers, and the like; divinyl ethers such as triethylene glycol divinyl ether, 1,4-cyclohexane dimethanol divinyl ether, trivinyl ethers, and the like. It is preferred that alkyl vinyl ethers with up to 3 carbon alkyl groups and one- to three-carbon alkyl (alkyl vinyl) ethers with alkyl vinyl groups of up to 8 carbon atoms are used.

Illustrative of suitable acroleins useful in preparing the liquid hydrocarbon diols include, among others, acrolein; 2-ethyl-2-butenal; 2-methyl-2-butenal; 2-(n-propyl)-2-butenal; 2-(i-propyl)-2-butenal; 2-methyl-2-pentenal, which has the structure:

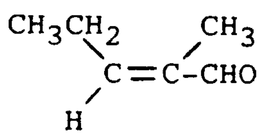
;

2-ethyl-2-pentenal; 2-(n-propyl)-2-pentenal;
2-(i-propyl)-2-pentenal; 2-(n-butyl)-pentenal;
2-(i-butyl)-pentenal; 2-(s-butyl)-pentenal;
2-(t-butyl)-pentenal; 2-amyl pentenals;
2-ethyl-2-hexenal, which has the structure:

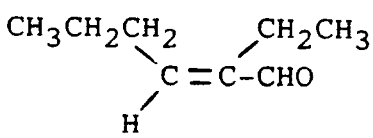
;

2-methyl-2-hexenals; 2-(n-propyl)-2-hexenals;
2-(i-propyl)-2-hexenals; 2-(n-butyl)-2-hexenals;
2-(i-butyl)-2-hexenals; 2-(s-butyl)-2-hexenals;
2-(t-butyl)-2-hexenals; 2-amyl hexenals; and the like.

Illustrative of suitable substituted 3,4-dihydropyrans prepared in reaction step (a) above include, for example, 2-alkoxy-5-ethyl-4-propyl-3,4-dihydro-1,2-pyran, 2-alkoxy-4-ethyl-5-methyl-3,4-dihydro-1,2-pyran, 2-alkoxy-4-ethyl-3,5-dimethyl-3,4-dihydro-1,2-pyran, 2-alkoxy-5-ethyl-3-methyl-4-propyl-3,4-dihydro-1,2-pyran, 2-alkoxy-3,4-diethyl-5-methyl-3,4-dihydro-1,2-pyran, 2-alkoxy-4-ethyl-3,3',5-trimethyl-3,4-dihydro-1,2-pyran, 2-alkoxy-3,3'-dimethyl-4-propyl-3,4-dihydro-1,2-pyran, 2-alkoxy-3-methyl-3'-propyl-3,4-dihydro-1,2-pyran, 2-alkoxy-4-ethyl-5-methyl-3-methyl-3'-propyl-3,4-dihydro-1,2-pyran, 2-alkoxy-5-ethyl-3-methyl-3',4-dipropyl-3,4-dihydro-1,2-pyran, 2-alkoxy-3-butyl-3'-ethyl-3,4-dihydro-1,2-pyran, 2-alkoxy-3-butyl-3',4-diethyl-5-methyl-3,4-dihydro-1,2-pyran, 2-alkoxy-3-butyl-3',5-diethyl-4-propyl-3,4-dihydro-1,2-pyran, and the like. For purposes of these illustrative substituted 3,4-dihydropyrans, alkoxy refers to methoxy, ethoxy, n-propoxy, isopropoxy, n-butoxy, i-butoxy, s-butoxy, t-butoxy, and the like.

The step (a) reaction can be conducted at a temperature of from about 160 °C to 280 °C for a period of about 1 hour to about 7 days with the longer time being used at the lower temperature, preferably from about 180 °C to about 270 °C for about 1 hour to about 5 days, and more preferably at about 200 °C to 260 °C for about 1 hour to about 48 hours. During the reaction, from less than 0.01 percent by weight to about 5 percent by weight of the total weight of the starting materials, preferably from about 0.01 percent by weight to about 2 percent by weight, of a free radical inhibitor can be added to the reaction mass. Illustrative of such free radical inhibitors are 2,6-ditertiarybutyl-4-methyl phenol, hydroquinone, hydroquinone monomethyl ether, and the like. A particularly useful inhibitor is hydroquinone.

The step (a) reaction can be conducted over a wide range of pressures ranging from atmospheric pressure to superatmospheric pressures, e.g., from about 1 atmosphere to about 100 atmospheres or greater. It is preferable to conduct the step (a) reaction at pressures of from about atmospheric to about 75 atmospheres. The step (a) reaction is preferably effected in the liquid or vapor states or mixtures thereof.

The molar ratio of substituted vinyl ether to acrolein compound in the step (a) reaction is not narrowly critical and can range from about 0.05:1 or less to about 50:1 or greater, preferably from about 0.1:1 to about 10:1.

Illustrative of acid catalysts suitable for ring opening of the substituted 3,4-dihydropyran intermediates to form substituted dialdehydes in accordance with reaction step (b) above are mineral acids, including sulfuric acid, hydrochloric acid, phosphoric acid, triflic acid and its salts, sulfonic acids; organic acids including acetic acid, chloroacetic acid, oxalic acid; crosslinked acidic resins such as the various ion exchange resins including Amberlite® CG-400, Amberlite® IR-118; Amberlite® IR120(plus), Dowex® MSC-1, Dowex® M-31, Dowex® M32, Dowex® 50X2-100, Dowex® 50X2-200, Dowex® 50X2-400, Dowex® 50X4-400, Dowex® 50X8-100, Dowex® 50X8-200, Dowex® 50X8-400, Nafion® 117, Nafion® 417, Nafion® NR50, Nafion® perfluorinated powder, similar crosslinked acidic resins; perfluorinated polymers which contain sulfonic acid groups such as XUS-40036.02 (Dow Chemical Company); and the like. The illustrative ion exchange resins above, as well as others, are available from Aldrich Chemical Company, Inc.

The acid catalysts employed in the ring-opening of the substituted 3,4-dihydropyran intermediates are preferably used in conjunction with water; alcohols such as methanol, ethanol, isopropanol, n-propanol, n-butanol, sec-butanol, isobutanol, and tert-butanol, amyl alcohols as well as higher alcohols; glycol ethers such as ethoxy ethanol, methoxy ethanol, 1-methoxypropane, methoxyethoxy ethanol; glyme; and the like, as well as mixtures of water and other solvents. The amount of acid catalyst used in reaction step (b) is dependent on the particular catalyst employed and can range from about 0.01 weight percent or less to about 10 weight percent or greater of the total weight of the starting materials.

The acid dialdehyde reaction mass can be washed with water and/or aqueous solution of neutralizing agents. Illustrative of such neutralizing agents are sodium acetate, potassium acetate, sodium bicarbonate, sodium carbonate, potassium bicarbonate, potassium carbonate, and the like.

Illustrative of suitable substituted dialdehydes prepared in reaction step (b) above include, for example, 3-ethyl-2-methyl-1,5-pentanedial, 2-ethyl-3-propyl-1,5-pentanedial, 3-ethyl-2,4-dimethyl-1,5-pentanedial, 2-ethyl-4-methyl-3-propyl-1,5-pentanedial, 3,4-diethyl-2-methyl-1,5-pentanedial, 3-ethyl-2,4,4'-trimethyl-1,5-pentanedial, 2-ethyl-4,4'-dimethyl-3-propyl-1,5-pentanedial, 2-methyl-2'-propyl-1,5-pentanedial, 3-ethyl-2,4-dimethyl-4'-propyl-1,5-pentanedial, 2-ethyl-4-methyl-3,4'-dipropyl-1,5-pentanedial, 2-butyl-2'-ethyl-1,5-pentanedial, 4-butyl-3,4-diethyl-2-methyl-1,5-pentanedial, 4-butyl-2,4'-diethyl-3-propyl-1,5-pentanedial, and the like.

The step (b) reaction can be conducted over a wide range of pressures ranging from atmospheric or subatmospheric pressures to superatmospheric pressures, e.g., from about 1 atmosphere or less to about 25 atmospheres or greater. It is preferable to conduct the step (b) reaction at pressures of from about 1 atmosphere to about 10 atmospheres. The step (b) reaction is preferably effected in the liquid or vapor states or mixtures thereof.

The temperature of the step (b) reaction may be as low as about ambient temperature to about 300 °C. Preferably, the reaction temperature ranges from about 50 °C to about 200 °C, and more preferably from about 60 °C to about 120 °C.

Illustrative of catalysts useful in the hydrogenation step (c) involving reduction of substituted dialdehydes include, for example, Raney-type compounds such as Raney nickel and modified Raney nickels;

molybdenum-promoted nickel, chromium-promoted nickel, cobalt-promoted nickel; platinum; palladium; iron; cobalt molybdate on alumina; copper chromite; barium promoted copper chromite; tin-copper couple; zinc-copper couple; aluminum-cobalt; aluminum-copper; and aluminum-nickel; platinum; nickel; and the like. The amount of hydrogenation catalyst used in step (c) is dependent on the particular catalyst employed and can range from about 0.01 weight percent or less to about 10 weight percent or greater of the total weight of the starting materials.

The particular reaction conditions for the step (c) hydrogenation reaction are not narrowly critical, and can be any effective hydrogenation procedures sufficient to produce the substituted 1,5-pentanediols of this invention. The step (c) reaction can be carried out at temperatures of from about ambient temperature to about 250 °C, preferably from about 70 °C to about 200 °C, and more preferably from 90 °C to 150 °C. The step (c) reaction preferably may be conducted at pressures of from about 5 atmospheres to about 100 atmospheres, and more preferably from about 10 atmospheres to about 75 atmospheres.

Illustrative of suitable substituted 1,5-pentanediols useful in preparing the polyesters of this invention include, for example, 3-ethyl-2-methyl-1,5- pentanediol, 2-ethyl-3-propyl-1,5-pentanediol, 2,4-dimethyl-3-ethyl-1,5-pentanediol, 2-ethyl-4-methyl-3-propyl-1,5-pentanediol, 2,3-diethyl-4-methyl-1,5-pentanediol, 3-ethyl-2,2,4-trimethyl-1,5-pentanediol, 2,2-dimethyl-4-ethyl-3-propyl-1,5-pentanediol, 2-methyl-2-propyl-1,5-pentanediol, 2,4-dimethyl-3-ethyl-2-propyl-1,5-pentanediol, 2,3-dipropyl-4-ethyl-2-methyl-1,5-pentanediol, 2-butyl-2-ethyl-1,5-pentanediol, 2-butyl-2,3-diethyl-4-methyl-1,5-pentanediol, 2-butyl-2,4-diethyl-3-propyl-1,5-pentanediol, 3-butyl-2-propyl-1,5-pentanediol and the like, including mixtures thereof.

Illustrative derivatives based on the liquid hydrocarbon diols that are useful in the preparing the polyesters of this invention include, for example, silicone-containing compounds, polyols initiated with said diols, and the like, including mixtures thereof. This invention is not intended to be limited in any manner by the permissible derivatives of liquid hydrocarbon diols.

The silicone-containing derivative compounds useful in this invention can be prepared by conventional methods by either end capping, coupling, or other reaction when Formula I liquid hydrocarbon diols or mixtures of Formula I liquid hydrocarbon diols and optionally other polyols are reacted with silanes. Illustrative of the silane-containing derivative compounds include, for example, the following:

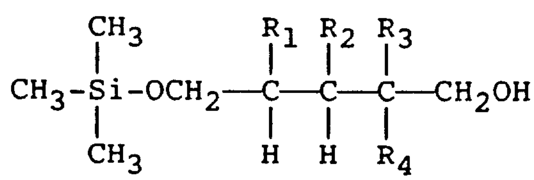

when 1 mole of trimethylchlorosilane and 1 mole of Formula II diol are reacted,

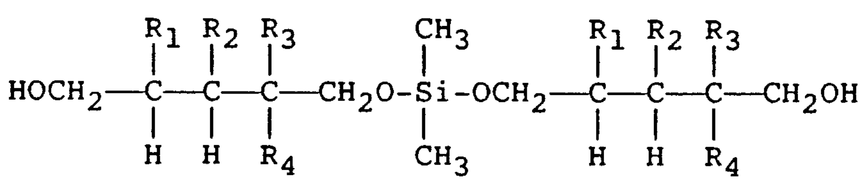

when one mole of dimethyldichlorosilane and two moles of Formula II diol are reacted,

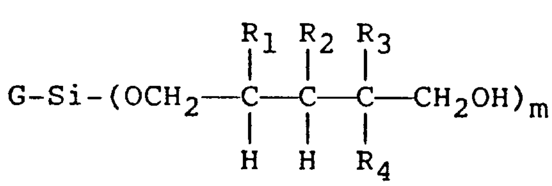

wherein $R_1$, $R_2$, $R_3$ and $R_4$ are as defined above, m is 3 or 4 and G is methyl when m is 3 and nonexistent when m is 4 when 3 moles (m = 3) or 4 moles (m = 4) of Formula I diol are reacted with

methyltrichlorosilane or tetrachlorosilane respectively, and the like. It is preferred that the silane-containing product have residual hydroxyl groups. It is understood by those skilled in the art that when polyfunctional compounds are combined, a variety of products, including chain extended products, can be obtained. Illustrative of the silanes that can be used to produce the silane-containing compounds useful in the compositions of the invention include, for example, chloroalkylchloro and arylchlorosilanes, diphenylethylchlorosilane, trimethylchlorosilane, dimethyldichloromethylsilane, triphenylchlorosilane, methyldichlorosilane, dimethylethylchlorosilane, dichlorosilane; alkoxysilanes such as methoxysilane, dimethoxysilane, diethyoxysilane, triethoxysilane, dimethylmethoxychlorsilane, dimethylmethoxysilane, tris(methoxy)-3-chloropropylsilane, and the like, including mixtures thereof.

Illustrative polyols that can be used in combination with the Formula I liquid hydrocarbon diols in preparation of the silicone-containing derivative products useful in this invention include, for example, diethylene glycol, 1,4-butanediol, 1,6-hexanediol, 1,4-dihydroxyquinone, 2,2-dimethyl-1,3-propanediol, hydroxyl-terminated polyesters, ethylene oxide/propylene oxide copolymer polyols, poly(ethylene oxide) polyols, poly(alkylene oxide) polyols, polyether polyols, poly(tetramethylene oxide) polyols, polycarbonate polyols, polylactone polyols, and the like, including mixtures thereof.

The polyol derivative products formed by ring-opening polymerization and initiated with the liquid hydrocarbon diols of Formula I and useful in this invention include, for example, polyols formed by reaction of one mole of the Formula I compound and from about one to about 10 moles of ε-caprolactone, substituted ε-caprolactone, δ-valerolactone, substituted δ-valerolactones, or a mixture of such lactones or other copolymerizable lactones; or from 1 to about 10 moles of propylene oxide, epichlorohydrin, 1,2-butylene oxide, or ethylene oxide or mixtures of such oxides, with it preferred that from 1 to about 4 moles of ethylene oxide be used alone or in the mixtures. If desired both alkylene oxide and lactone units can be present in the polyols. Methods of preparation of such polyols are well known to those skilled in the art of lactone or alkylene oxide polymerization.

The essentially hydroxyl-terminated polyester product can be described as follows when Formula I diols are used in conjunction with a dicarboxylic acid:

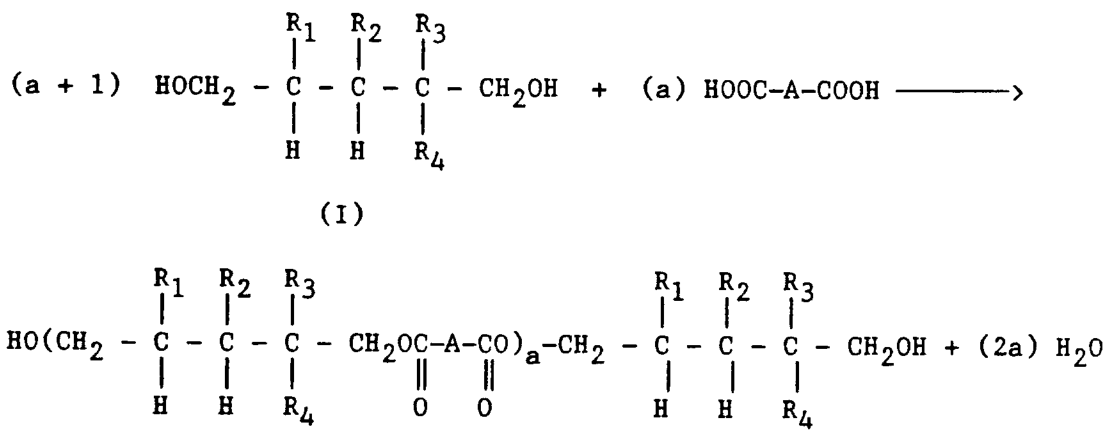

(I)

(II)

wherein $R_1$, $R_2$, $R_3$ and $R_4$ are as defined above, A is the same or different and is a substituted or unsubstituted hydrocarbon residue, preferably aryl such as phenylene, substituted phenylene, alkyl, cyclohexyl, substituted cyclohexyl and the like, and a is a value of from about 1 to about 300 or greater, preferably from about 1 to about 150 and more preferably from about 1 to about 75 or less.

Illustrative of the polyfunctional carboxylic acids that can be used to prepare the polyesters of this invention include, for example, oxalic acid, malonic acid, succinic acid, glutaric acid, adipic acid, pimelic acid, suberic acid, azelaic acid, sebacic acid, undecanedioic acid, dodecanedioic acid, tridecanedioic acid, maleic acid, fumaric acid, 2-methyl-cis-2-butenedioic acid, 2-methylenesuccinic acid, 1,1-cyclobutanedicarboxylic acid, norcamphoric acid, tetrahydrophthalic acid, methyl-tetrahydrophthalic acid, 1,1-cyclohexanedicarboxylic acid, hexahydrophthalic acid, 1,4-cyclohexanedicarboxylic acid, chlorendic acid, 1,4-benzenediacetic acid, phthalic acid, isophthalic acid, trimellitic acid, any other polyfunctional carboxylic acid including those having substituents thereon such as alkyl or alkoxy groups, nitro, halogen, aryl, carboxyl or any other group that will not unduly interfere with the reaction and the like as well as mixtures of such acids

and mixtures of such acids with acid anhydrides.

Illustrative of the acid anhydrides that can be used to prepare the polyesters of this invention include, for example, trimellitic anhydride, tetrahydrophthalic anhydride, phthalic anhydride, isophthalic anhydride, benzophenone dicarboxylic acid anhydride, succinic anhydride, glutaric anhydride, napthoic anhydride, clorendic anhydride, maleic anhydride, or any other intramolecular anhydride including those having substituents thereon such as alkyl or alkoxy groups, nitro, halogen, aryl, carboxyl or any other group that will not unduly interfere with the reaction and the like as well as mixtures of anhydrides or mixtures of anhydrides and polyfunctional carboxylic acids.

Optionally, other di-, tri-, tetra-, and higher-functionality polyols may be used in combination with the 1,5-pentanediols of Formula I to form the polyesters of Formula II. Suitable polyols include, for example, ethylene glycol, diethylene glycol, propylene glycol, dipropylene glycol, polyoxypropylene diols and triols, neopentyl glycol, esterdiols such as Esterdiol-204 and ethoxylated and propoxylated esterdiols, ethylene oxide/propylene oxide copolymer polyols, polyether polyols, polycarbonate polyols, poly(alkylene oxide) polyols, 1,3-propanediol, 1,4-butanediols, poly(tetramethylene oxide) polyols, 1,5-pentanediols other than those of Formula I, 1,6-hexanediols, 2-ethyl-1,3-hexanediol, 1,7-heptanediol, and higher linear and branched hydrocarbon diols, polylactone diols and triols such as the poly-$\epsilon$-caprolactone polyols; halogenated diols such as 3-chloro-1,2-propanediol, 2,3-dibromo-1,4-butanediol; triols and higher hydroxyl-functional polyols such as trimethylolpropane, pentaerythritol, dipentaerythritol, sorbitol, sucrose; hydroquinone and substituted hydoquinones, bisphenols such as Bisphenol A, Bisphenol C, Bisphenol F, as well as others; 1,2-cyclohexanediols, 1,3-cyclohexanediols, 1,4-cyclohexanediols, 1,4-cyclohexane dimethanol, xylenediols, 2,2,4,4-tetramethyl-1,3-cyclobutanediol, and the like, including mixtures thereof.

The properties of polyester coatings may be altered by changing the ratio of aromatic dicarboxylic acid or acid anhydride, for example isophthalic acid or anhydride, to aliphatic dicarboxylic acid, for example adipic acid. The aromatic dicarboxylic acid is used to confer hardness and the aliphatic dicarboxylic acid is used to confer flexibility and/or toughness to the final coating prepared from the polyester. As this ratio of aromatic dicarboxylic acid to aliphatic dicarboxylic acid is increased and the amount of aromatic dicarboxylic acid increases relative to the amount of aliphatic dicarboxylic acid in the polyester, one would expect an increase in cured coating hardness and a concomitant decrease in impact resistance and/or flexibility. The expected result when an increase in hardness is obtained is a markedly deleterious effect on the impact resistance. By employing the liquid hydrocarbon diols in the polyesters of this invention, one can obtain both a significant increase in hardness and impact resistance when the ratio of aromatic dicarboxylic acid to aliphatic dicarboxylic acid is increased. It is desirable to increase hardness while suffering only minor decreases in impact resistance.

The catalysts that may be used to prepare the polyesters of this invention are those known to persons skilled in the art of polyester preparation, and can be used in conventional amounts, illustrative of which are dibutyltin oxide, antimony oxide, tin oxide, titanium alkoxides, alkali metal salts or metallic salts of manganese, cadmium, magnesium, zinc, cobalt, tin, and the like.

The amount of liquid hydrocarbon diol and optional polyol to be used for preparation of the polyesters of this invention is not narrowly critical; however, it is preferably equal to the number of equivalents of acid plus one so that an essentially hydroxyl-terminated polyester as depicted by Formula II is obtained. If desired, an excess of liquid hydrocarbon diol and optional polyol can be used. These polyesters cab be prepared by charging the Formula I 1,5-pentanediol and any other polyol that is to be used through a feeding system to an agitated reactor blanketed with nitrogen or other inert gas. The polyfunctional carboxylic acid and/or acid anhydride are then charged to the reactor in a similar manner. The reactor contents are heated to a temperature of from about 160 °C to about 280 °C, preferably from 190 °C to 220 °C. Water generated in the condensation reaction is then removed overhead though a condensing system. If desired, an azeotroping solvent for water, such as ethyl benzene, toluene and xylene may be added. If a trifunctional polyol such as trimethylolpropane is to be added, it is usually added after about 3 to 10 hours reaction time to minimize the potential for high viscosity and or gelation. Heating is continued for a period of about 4 to 24 hours, preferably from about 8 to 12 hours. Then a vacuum is applied to remove traces of water, azeotroping solvent, and any other impurities, and heating is continued at temperature. The reaction product transferred to an inerted storage tank, drums, or other vessel, cooled, and stored. If desired, an inert solvent may be added to the reaction mass. Illustrative of such solvents are 1,1,1-trichloroethane, ethoxyethyl acetate, ethoxybutanol acetate, butyl acetate, methyl isobutyl ketone, methyl amyl ketone, methyl ethyl ketone, xylene, toluene, benzene, ethyl benzene, and the like.

If desired, the polyesters of this invention can be produced by transesterification processes. Such transesterification processes can be conducted in accordance with conventional procedures known in the art.

Coatings can be produced by formulating the polyesters of this invention with one or more of a variety of crosslinking agents including, for example, aminoplasts, phenolics, cycloaliphatic epoxides, isocyanates, blocked isocyanates, and the like, along with suitable thermal-cure catalysts or onium salt photoinitiators for the reaction. Included in the coating formulation could be a variety of ingredients known to those skilled in the art of formulating coatings including but not limited to surface active agents, thickeners, reactive diluents, vinyl esters, vinyl ethers, acrylates, polyols, epoxides, flow and leveling agents, colored organic and inorganic pigments, pearlescent colorants, ceramic pigments, extenders, slip agents such as the silicone oils, powdered polytetrafluoroethylene and/or ethylene; coupling agents, stabilizers, antioxidants, solvents, waxes, adhesion promoters, lubricants such as lanolin wax, petrolatum, polyethylene wax; and the like. The coating ingredients can be employed in conventional amounts known in the art.

Illustrative of the aminoplasts are alkoxymelamines, melamine-formaldehydes, urea-formaldehydes, alkylated benzoquaniamines, guanyl ureas, guanidienes, biguanidines, such as hexamethoxymethylmelamine, methylated melamine, butylated melamine, butylated urea, and the like.

Phenolic crosslinking agents are the soluble, heat-reactive phenols or resoles such as those described in T. S. Carswell, Phenoplasts, pages 9-29, Interscience Publishers Inc., New York (1947) and in J. A. Brydson, Plastics Materials, pages 385-386, D. Van Nostrand Co. Inc., New Jersey (1966). Such heat reactive phenolics are generally made by reacting various phenols with an excess of formaldehyde under basic conditions. Illustrative of the heat-reactive phenolics are monomers and polymers of alkylated phenol-formaldehyde, alkylated cresol-formaldehyde, including methylated phenol-formaldehyde, butylated phenol-formaldehyde, cresol-formaldehyde, and the like as well as the variety of heat reactive phenolics made by reacting phenol, propyl phenols, butyl phenols, amyl phenols and higher hydrocarbon phenols, o-, m-, and p-cresol, xylenols, and the like with formaldehyde in the presence of a suitable catalyst such as ammonia, ethylamine, triethylamine, as well as other phenolics which are known in the art of making heat reactive phenolics.

Illustrative of the cycloaliphatic epoxides that are useful as cross linking agents are those having an average of two or more epoxide groups per molecule such as 3,4-epoxycyclohexylmethyl 3,4-epoxycyclohexanecarboxylate, 3,4-epoxy-1-methyl-cyclohexylmethyl 3,4-epoxy-1-methylcyclohexanecarboxylate, 6-methyl-3,4-epoxycyclohexylmethyl 6-methyl-3,4-cyclohexanecarboxylate, the compounds described in U.S. Patent No. 2,890,194; bis(3,4-epoxycyclohexylmethyl)oxylate, bis(3,4-epoxycyclohexylmethyl)adipate, bis(3,4-epoxycyclohexylmethyl)pimelate, bis(3,4-epoxy-6-methylcyclohexylmethyl), the compounds described in U.S. Patent No. 2,750,395; 3,4-epoxycyclohexyl-5,5-spiro-3,4-epoxy)cyclohexane-m-dioxane, and like compounds as described in U.S. Patent No. 3,318,822; cyclopentadiene diepoxide, cyclohexane diepoxide, limonene diepoxide, and the like. If desired, the formulations may contain minor amounts of cycloaliphatic monoepoxides such as limonene monoepoxide, vinyl cyclohexene monoepoxide, alpha-pinene monoepoxide, norbornene monoepoxide, cyclohexene monoepoxide, as well as 3,4-epoxy derivatives of alkoxylated and/or lactone derivatives of tetrahydrobenzyl alcohol, and the like.

The formulated, uncured coatings containing the polyesters of the invention and cycloaliphatic epoxides can be cured with ultraviolet light when suitable photoinitiators are included in the formulation. The photoinitiators that can be used are of the onium salt type. The ratio of polyester to cycloalphatic epoxide can vary broadly in the photocurable compositions, since a wide variety of hard or soft coatings can be made. However, it is preferred that from about 1 to about 50 parts of the polyester and from about 50 to 99 parts of the cycloaliphatic epoxide be used in the compositions, and more preferred from about 1 to about 30 parts of the polyester and from about 70 to about 99 parts of the cycloaliphatic epoxide be used. If desired, polyols can be added to the formulation as well as surfactants and acrylates, particularly multifunctional acrylates. Illustrative of the polyols that can be used include poly-$\epsilon$-caprolactone polyols, polyester polyols, polyoxypropylene polyols, poly(oxypropylene/oxyethylene) polyols, polyoxyethylene polyols, polycarbonate polyols, poly(tetramethylene oxide) polyols, ethylene glycol, 1,4-butanediol, 2-ethyl-3-propyl-1,5-pentanadiol, 1,6-hexanediol, and the like. Illustrative of the acrylates that can be used include 2-ethyl hexyl acrylate, trimethylolpropane triacrylate, 1,6-hexanediol diacrylate, ethoxylated trimethylolpropane triacrylate, propoxylated trimethylolpropane triacrylate, higher functional acrylates, and the like.

Illustrative of the onium salt photoinitiators useful in the protocurable coating compositions of this invention containing mixtures of the polyesters of the invention, cycloaliphatic epoxides, and optional ingredients one can mention one or more of a metal fluoroborate and a complex of boron trifluoride as described in U.S. Patent No. 3,379,653; a bis(perfluoroalkylsulfonyl)methane metal salt, as described in U.S. Patent No. 3,586,616; an aryl diazonium compound as described in U.S. Patent No. 3,708,296; an aromatic onium salt of Group VIa elements as described in U.S. Patent No. 4,058,400; an aromatic onium salt of Group Va elements as described in U.S. Patent No. 4,069,055; a dicarbonyl chelate of a Group IIIa-Va element as described in U.S. Patent No. 4,068,091; a thiopyrylium salt as described in U.S. Patent No.

4,139,655; a Group VIb element in an $MF_6$ anion where M is selected from phosphorous, antimony, and arsenic as described in U.S. Patent No. 4,161,478; an arylsulfonium complex salt as described in U.S. Patent No. 4,231,951; an aromatic iodonium complex salt and an aromatic sulfonium complex salt, as described in U.S. Patent 4,256,828; and a bis(4-diphenylsulfonio)phenyl) sulfide-bis-hexafluorometallic salts such as the phosphate, arsenate, antimonate and the like as described by W. R. Watt and coworkers in J. Polymer Sci.: Polymer Chem. Ed., 22, 1789 (1984). Preferred cationic photoinitiators include the arylsulfonium or aryliodonium complex salts, aromatic sulfonium or iodonium salts of halogen containing complex ions, and aromatic onium salts of Group II, V, and VI elements. Some of such salts are commercially available in a solution form as FX-512, thought to be any arylsulfonium hexafluorophosphate, from 3M Co.; CYRACURE® UVR-6990 and UVR-6974, arylsulfonium hexafluorophosphate and arylsulfonium hexafluoroantimonate, respectively, from Union Carbide Chemicals and Plastics Company Inc.; UVE-1014 and UVE-1016, arylsulfonium hexafluorophosphate and arylsulfonium hexafluoroantimonate, respectively, from General Electric Co., KI-85, thought to be bis(4-(disphenylsulfonio)phenyl)sulfide-bis-hexafluorophosphate, from Degussa AG; and SP-150 and SP-170, thought to be bis(4-(diphenylsulfonio)phenyl)sulfide-bis-hexafluorophosphate and bis(4-(diphenylsulfonio)phenyl)sulfide-bis-hexafluoroantimonate, respectively, from Asahi Denka Kogyo K.K. The onium salt photoinitiators are used at a concentration of less than about 0.1 weight percent to about 10 weight percent, preferably at concentrations of about 0.3 weight percent to about 5 weight percent of the total composition.

Illustrative of the polyfunctional isocyanates useful for crosslinking the polyesters of this invention are those known and include, for example, 2,4-toluene diisocyanate and 2,6-toluene diisocyanate as well as mixtures of these diisocyanates; 3-isocyanatomethyl-3,5,5-trimethylcyclohexylisocyanate, 4,4'-diphenylmethane diisocyanate (MDI), 4,4'-dicyclohexyldiisocyanate or reduced MDI, meta- and para-tetramethyl xylene diisocyanate, hexamethylene diisocyanate, 4,4', 4''-triisocyanatotriphenylmethane, 2,2,4- and 2,4,4-trimethylenehexamethylene diisocyanate, and the like.

Illustrative of the catalysts that can be used to thermal cure the polyesters cured with aminoplast, phenolic, or cycloaliphatic epoxide coatings of this invention include, for example, para-toluene sulfonic acid, triflic acid salts, boron trifluoride etherate, boron trifluoride, sulfonium salts, and the like. Illustrative of the triflic acid salts are diethylammonium triflate, ammonium triflate, di-isopropylammonium triflate and others. These catalysts are usually used at concentration of about 0.05 weight percent to about 1 weight percent of the formulation.

Illustrative of the catalysts that can be used to catalyze the isocyanate/hydroxyl reaction that is involved in cross linking the polyesters with multifunctional isocyanates to form urethane linkages are known to those skilled in the art. Illustrative of such catalysts which can be used in conventional amounts include organometallics such as stannous octanoate, zinc octanoate, dibutyltin dilaurate; amines such as the alkanolamines, tetramethyldiamines; and the like.

The polyester-containing coatings of this invention can be applied and cured on a variety of substrates known to those skilled in the art of coatings technology. Illustrative of such substrates are steel, treated steel, tin-plated steel, galvanized steel, treated and untreated aluminum, glass, wood, paper, coated or printed paper, epoxy/fiberglass composites, polymers such as poly(ethylene terephthalate), poly(butylene terephthalate), treated polyethylene and polypropylene, vinyl film, vacuum or vapor deposited aluminum, gold, copper, silver, zinc, nickel, tin, and other metals, electroless nickel, copper-nickel alloys and the like, electrodeposited metals such as silver, copper, nickel, chromium, silver-copper alloys, and the like, glass-reinforced unsaturated-polyester/styrene products, and the like.

As used herein, the term "polyol" is contemplated to include all permissible hydrocarbon compounds having 2 or more hydroxyl groups, e.g., diols, triols and the like.

For purposes of this invention, the term "hydrocarbon" is contemplated to include all permissible compounds having at least one hydrogen and one carbon atom. In a broad aspect, the permissible hydrocarbons include acyclic and cyclic, branched and unbranched, carbocyclic and heterocyclic, aromatic and nonaromatic organic compounds which can be substituted or unsubstituted.

As used herein, the term "substituted" is contemplated to include all permissible substituents of organic compounds unless otherwise indicated. In a broad aspect, the permissible substituents include acyclic and cyclic, branched and unbranched, carbocyclic and heterocyclic, aromatic and nonaromatic substituents of organic compounds. Illustrative substituents include, for example, alkyl, alkyloxy, aryl, aryloxy, hydroxy, hydroxyalkyl, amino, aminoalkyl, halogen and the like in which the number of carbons can range from 1 to about 20 or more, preferably from 1 to about 12. The permissible substituents can be one or more and the same or different for appropriate organic compounds. This invention is not intended to be limited in any manner by the permissible substituents of organic compounds.

Certain of the following examples are provided to further illustrate this invention.

Glossary of Terms

Gloss Retention - This gloss retention is a measure of water resistance. After measuring the 20° spectral gloss, the coated panels were suspended in a 50°C water bath for 17 hours. They were removed from the bath, dried, and the 20° spectral gloss was remeasured and the percent gloss retention was calculated.

Spot Tests (5 hour) - Spot tests were performed by using 5 percent hydrochloric acid, 20 percent sodium hydroxide, bleach, mustard, lipstick, iodine, and ink by placing an approximately one-inch diameter drop on the coating surface and allowing the "spotted" sample to remain uncovered under ambient condition for 5 hours. The test solution was then rinsed away using deionized water or by wiping in the case of solids, and the coating was examined for blushing, blistering, or discoloration.

Double Rubs - Solvent resistance was measured as the number of solvent (methyl ethyl ketone double rubs or acetone double rubs) that were required to cut through the coating. If 100 rubs or more did not cut through the coating, the coating was recorded as >100. To perform the test, the solvent-soaked cloth was rubbed back and forth with hand pressure. A rub back and forth was designated as one "double rub."

Crosshatch Adhesion - Procedure conducted in accordance with ASTM D 3359-87.

Conical Mandril Bend - Procedure conducted in accordance with ASTM D 522-85.

Pencil Hardness - Procedure conducted in accordance with ASTM D 3363-74.

Electrical Insulation Resistance - This electrical property is a measure of the electrical resistance property or resistance offered by the material to passage of an electrical current. The measurements were made in accordance with method 302, test condition B, of Military Standard 202. Insulating materials are very poor conductors of electricity and offer high resistance and thus the higher the value, the better the insulating property of a material. When temperature increases, insulating resistance decreases. When moisture content of a coating as might be encountered under high humidity conditions increases, insulation resistance decreases. Coatings with a high insulation resistance and the ability to maintain such resistance under high humidity conditions are useful protectors of electrical circuitry.

Distinctness of Reflected Image - This property was measured with a Model #1792 Portable Distinctness of Reflected Image Meter using the manufacturer's method of operation. The meter is available from ATI Systems Inc., Madison Heights, MI.

Acrylic I - A thermoplastic acrylic polymer for formulation of coatings and commercially available from Rohm and Haas Company as AT-954.

Catalyst I - A 40 percent solution of p-toluenesulfonic acid in methanol.

Catalyst II - A solution of diethylammonium triflate commercially available from 3M Company as FC-520.

Epoxide I - A cycloaliphatic epoxide commercially available from Union Carbide Chemicals and Plastics Company Inc. as CYRACURE® UVR-6110, 3,4-epoxycyclohexylmethyl 3,4-epoxycyclohexane-carboxylate.

Melamine I - A polymethoxymethyl melamine commercially available from Monsanto Company as CYMEL® 303.

Surfactant I - A 25 percent solution of a methoxy-terminated poly(ethylene oxide) modified polydimethylsiloxane in methyl amyl ketone commercially available from Union Carbide Chemicals and Plastics Company Inc. as SILWET® L-77.

Surfactant II - A 25 percent solution of a methoxy-terminated ethylene oxide/propylene oxide copolymer modified polydimethylsiloxane in methyl amyl ketone commercially available from Union Carbide Chemicals and Plastics Company Inc. as SILWET® L-7001.

Surfactant III - A hydroxy-terminated poly(ethylene oxide) modified polydimethylsiloxane commercially available from Union Carbide Chemicals and Plastics Company Inc. as SILWET® L-7604.

Photoinitiator I - A cationic photoinitiator commercially available from Union Carbide Chemicals and Plastics Company Inc. as CYRACURE® UVI-6974.

Vinyl Ester I - A vinyl ester monomer commercially available from Union Carbide Chemicals and Plastics Company Inc. as VYNATE® C10.

Vinyl Ester II - A vinyl ester prepared from Versatic 10 which is a synthetic, saturated monocarboxylic acid with a highly branched structure that contains 10 carbon atoms and is commercially available from Shell Chemical Company as Veova® VV10.

Example 1

A four-necked, one-liter round bottom flask equipped with a mechanical stirrer, thermometer, nitrogen sparging tube, and a simple distillation head was charged with 76.7 grams (0.44 mole) of 2-ethyl-3-propyl-1,5-pentanediol, 5.4 grams (0.040 mole) of trimethylolpropane, 24.9 grams (0.15 mole) of isophthalic acid, 21.9 grams (0.15 mole) of adipic acid, and 0.26 grams (0.2 weight percent) dibutyltin oxide catalyst. The ingredients were kept under a nitrogen sparge with stirring throughout the course of the reaction. The system was heated gradually heated to 160 °C over a one-hour period. The temperature was maintained at 160 °C with a Therm-O-Watch controller for one hour, and then the temperature was increased in 10 degree increments every 45 minutes until a reaction temperature of 220 °C was attained. This temperature was maintained for 30 minutes after which the system was allowed to cool to room temperature. All water of condensation formed by the reaction was removed with the simple distillation head. The resulting polyester had a Brookfield viscosity of 43,600 centipoise at 23 °C, an hydroxyl number of 147, and an acid number of 1.79. Molecular weight determination by gel permeation chromatography using a polystyrene standard resulted in an apparent number average molecular weight of 993, a weight-average molecular weight of 2155, and a polydispersity of 2.17.

Example 2

A polyester was prepared in the same manner as that of Example 1 except the following ingredients were used: 75.2 grams (0.43 mole) of 2-ethyl-3-propyl-1,5-pentanediol, 3.5 grams (0.026 mole) of trimethylolpropane, 16.2 grams (0.10 mole) of isophthalic acid, 14.3 grams (0.10 mole) of adipic acid, and 0.22 grams (0.2 weight percent) dibutyltin oxide catalyst. The resulting polyester had a Brookfield viscosity of 5,440 centipoise at 23 °C, an hydroxyl number of 258, and an acid number of 2.23. Molecular weight determination by gel permeation chromatography using a polystyrene standard resulted in an apparent number average molecular weight of 831, a weight-average molecular weight of 1161, and a polydispersity of 1.40.

Control Examples A through D

In the same manner as described in Example 1, control polyesters were prepared from a five-carbon diol, a six-carbon diol, a nine-carbon diol, a four-carbon diol, and the ingredients listed in Table A below. The control polyesters had the properties given in Table A.

Table A

| | Control A 5-Carbon Diol | | Control B 6-Carbon Diol | | Control C 9-Carbon Diol | | Control D 4-Carbon Diol | |
|---|---|---|---|---|---|---|---|---|
| Ingredients | grams | moles | grams | moles | grams | moles | grams | moles |
| 2,2-dimethyl-1,3-propanediol | 206.8 | 1.98 | — | — | — | — | — | — |
| 2,2,4-trimethyl-1,3-propanediol | — | — | 289.5 | 1.98 | — | — | — | — |
| 2-butyl-2-ethyl-1,3-propanediol | — | — | — | — | 317.3 | 1.98 | — | — |
| 2-methyl-1,3-propanediol | — | — | — | — | — | — | 178.4 | 1.98 |
| Trimethylolpropane | 24.2 | 0.18 | 24.2 | 0.18 | 24.2 | 0.18 | 24.2 | 0.18 |
| Isophthalic acid | 112.0 | 0.67 | 112.0 | 0.67 | 112.0 | 0.67 | 112.0 | 0.67 |
| Adipic acid | 98.4 | 0.67 | 98.4 | 0.67 | 98.4 | 0.67 | 98.4 | 0.67 |
| Dibutyltin oxide | 0.88 | — | 0.88 | — | 0.88 | — | 0.88 | — |
| Properties | | | | | | | | |
| Viscosity, cp (23°C) | 314,000 | | 319,000 | | 125,000 | | 39,700 | |
| Molecular Weight (GPC) | | | | | | | | |
| Number average | 910 | | 1124 | | 658 | | 776 | |
| Weight average | 1548 | | 1964 | | 1415 | | 1359 | |
| Equivalent Weight from Hydroxyl Number | 237 | | 420 | | 280 | | 212 | |

Although the polyesters of Control Examples A, B and C had apparent molecular weights as determined by gel permeation chromatography similar to the polyester of Example 1, the viscosities of the Examples 1 and 2 polyesters were markedly lower than that of these control polyesters. The properties of the coatings made

from the polyesters of Control Examples A, B, C and D are given in Table C below.

Example 3 and Control Examples E through I

These examples describe preparation of thermally curable coatings prepared from a polyester identified in Table B below and an aminoplast crosslinking agent. The ingredients listed in Table B, except for Catalyst I, were placed in a glass container and thoroughly mixed for each example. When they were well mixed, Catalyst I was stirred into the blend. The blended components were allowed to stand under ambient conditions to allow escape of entrapped air. The liquid coating was then applied with a 10-mil wet-clearance film applicator to Bonderite 40 unpolished, cold-rolled steel panels using the draw-down technique. The coated panels were then baked in an air-circulating oven at 140 °C for 30 minutes. The coatings were then tested by the indicated tests in Table C below and the results are given in Table C.

Table B

| Ingredients, grams | Example 3 | Control E | Control F | Control G | Control H | Control I |
|---|---|---|---|---|---|---|
| Example 1 Polyester | 5.3 | --- | --- | --- | --- | --- |
| Control A Polyester | --- | 5.3 | --- | --- | --- | --- |
| Control B Polyester | --- | --- | 5.3 | --- | --- | --- |
| Control C Polyester | --- | --- | --- | 5.3 | --- | --- |
| Control D Polyester | --- | --- | --- | --- | --- | 5.3 |
| Acrylic I | --- | --- | --- | --- | 5.3 | --- |
| Melamine I | 2.3 | 2.3 | 2.3 | 2.3 | 2.3 | 2.3 |
| Methyl amyl ketone | 2.5 | 2.5 | 2.5 | 2.5 | 2.5 | 2.5 |
| Surfactant I | 0.16 | 0.16 | 0.16 | 0.16 | 0.16 | 0.16 |
| Surfactant II | 0.16 | 0.16 | 0.16 | 0.16 | 0.16 | 0.16 |
| Catalyst I | 0.06 | 0.06 | 0.06 | 0.06 | 0.06 | 0.06 |

Table C

| Cured Film Properties | Example 3 | Control E | Control F | Control G | Control H | Control I |
|---|---|---|---|---|---|---|
| Cured Film Thickness, mils | 2.0 | 2.0 | 2.3 | 1.7 | 1.4 | 1.7 |
| Specular Gloss (20°) (ASTM D 523-78) | 91.5 | 91.5 | 95.0 | 90.0 | 89.4 | 90.1 |
| Specular Gloss (60°) (ASTM D 523-78) | 100.4 | 101.6 | 102.0 | 99.4 | 100.2 | 101.8 |
| Pencil Hardness (ASTM D 3363-74) | 4H | F | 2H | F | 4H | F |
| Impact Resistance (ASTM D 2794-84) | | | | | | |
| Forward, in-lbs | 150 | 160 | 150 | 120 | 30 | 120 |
| Reverse, in-lbs | 120 | 50 | 20 | 40 | 5 | 30 |
| Gloss Retention, 20°, % | 100 | 99 | 96.7 | — | 100 | 60 |
| Methyl ethyl ketone double rubs | >100 | >100 | >100 | >100 | >100 | >100 |
| Spot Tests (5 hour)* | | | | | | |
| 5% Hydrochloric Acid | NE | NE | NE | — | — | — |
| 20% Sodium Hydroxide | NE | NE | NE | — | — | — |
| Bleach | NE | NE | NE | — | — | — |
| Ink | NE | NE | NE | — | — | — |
| Lipstick | NE | NE | NE | — | — | — |
| Mustard | SE | NE | NE | — | — | — |
| Iodine | SVE | SE | SE | — | — | — |

*NE = No Effect; SE = Slight Effect; SVE = Severe Effect

The coating of Example 3 has an excellent combination of hardness and both forward and reverse impact resistance along with excellent resistance to acid, base, bleach, ink and lipstick, high gloss and gloss retention when immersed in hot water relative to the coatings prepared from the control polyesters and the control acrylic.

Examples 4 and 5

The following examples describe preparation of thermally curable coatings from the polyester of Example 1 and a cycloaliphatic epoxide in the presence of a triflic acid salt catalyst. The ingredients listed in Table D below were placed in amber glass bottles and mixed well. The formulated, liquid coating systems were coated onto phosphatized steel panels with a No. 20 wire-wound rod and cured an air-circulating oven for 30 minutes at 110 °C. A second set of panels were prepared and cured for 15 minutes at 120 °C. The cured coatings, which were of high gloss and tack free, were cooled to room temperature and tested for the properties given in Table D.

Table D

| Ingredients | Example 4 Grams | Example 4 Wt. Percent | Example 5 Grams | Example 5 Wt. Percent |
|---|---|---|---|---|
| Example 1 Polyester | 6.48 | 25.92 | 3.81 | 15.24 |
| Epoxide I | 18.27 | 73.08 | 18.78 | 75.12 |
| Vinyl Ester I | --- | --- | 2.16 | 8.64 |
| Surfactant II | 0.125 | 0.50 | 0.125 | 0.50 |
| Catalyst II | 0.125 | 0.50 | 0.125 | 0.50 |
| Properties after cure at 110°C for 30 min. | | | | |
| Double acetone rubs | 100 (1) | | 100 (1) | |
| Pencil Hardness | 3H | | >6H | |
| Crosshatch Adhesion, % | 100 | | 100 | |
| Properties after cure at 120°C for 15 min. | | | | |
| Double acetone rubs | 100 (1) | | 100 (1) | |
| Pencil Hardness | 2H | | 4H-5H | |
| Crosshatch Adhesion, % | 100 | | 100 | |

In addition to these properties, when the coatings were contacted with pH 2.0 sulfuric acid solution at 50°C and 70°C, they exhibited excellent acid resistance indicating that they would have good resistance to hostile environments such as those encountered in acid rain situations. Thus, very hard coatings with excellent solvent resistance and adhesion were formed at low temperatures when the polyesters of this invention were reacted with a cycloaliphatic epoxide in the presence of a triflic acid salt.

Examples 6 and 7

Polyesters were prepared in the same manner as that of Example 1 except the ingredients listed in Table E below were used. In addition, a small amount of xylene was used as an inert solvent for the reaction. The polyesters had the properties given in Table E.

Table E

| Ingredients | Example 6 Grams | Example 6 Moles | Example 7 Grams | Example 7 Moles |
|---|---|---|---|---|
| 2-Ethyl-3-propyl-1,5-pentanediol | 125.0 | 0.72 | 125.0 | 0.72 |
| Trimethylolpropane | 8.8 | 0.07 | 8.8 | 0.07 |
| Adipic acid | 29.6 | 0.20 | 14.7 | 0.10 |
| Isophthalic acid | 63.8 | 0.38 | 66.7 | 0.40 |
| Dibutyltin oxide catalyst | 0.43 | —— | 0.43 | —— |
| Xylene | 2.3 | —— | 2.2 | —— |
| Polyester Properties | | | | |
| Hydroxyl Number | 72.8 | —— | 76.7 | —— |
| Acid Number | 4.33 | —— | 3.05 | —— |
| Gel Permeation Molecular Weight | | | | |
| Number Average | 1316 | —— | 1026 | —— |
| Weight Average | 2789 | —— | 1791 | —— |
| Polydispersity | 2.12 | —— | 1.75 | —— |
| Brookfield Viscosity, cP, 25°C | 462,000 | —— | 169,500 | —— |

Examples 8 and 9

These examples describe preparation of thermally curable coatings prepared from the polyesters prepared in Examples 6 and 7, an aminoplast cross linking agent and other ingredients listed in Table F below and cured in the same manner as described in Example 3. The coatings were then tested by the indicated tests in Table F and the results are given in Table F.

Table F

| Ingredients, grams | Example 8 | Example 9 |
|---|---|---|
| Example 6 Polyester | 26.3 | ---- |
| Example 7 Polyester | ---- | 26.3 |
| Melamine I | 11.5 | 11.5 |
| Methyl amyl ketone | 12.5 | 12.5 |
| Surfactant I | 0.8 | 0.8 |
| Surfactant II | 0.8 | 0.8 |
| Catalyst I | 0.3 | 0.3 |
| **Cured Film Properties** | | |
| Cured film thickness, mils | 1.9 | 1.8 |
| Specular Gloss (20°) (ASTM D 523-78) | 90.6 | 93.7 |
| Specular Gloss (60°) (ASTM D 523-78) | 97.8 | 98.9 |
| Distinctness of Reflected Image | 57 | 51 |
| Pencil Hardness (ASTM D 3363-74) | 2H | 3H |
| Impact Resistance (ASTM D 2794-84) | | |
| Forward, in-lbs | >300 | 275 |
| Reverse, in-lbs | >300 | 200 |
| Gloss Retention, 20°, % | 99.9 | 99.5 |
| Methyl ethyl ketone double rubs | >500 | >500 |
| Crosshatch Adhesion | 100% | 100% |
| Conical Mandril Bend | Passed | Passed |

The coatings of Example 8 and 9 have an excellent combination of high gloss, distinctness of reflected image, hardness, both forward and reverse impact resistance, flexibility, adhesion, solvent resistance, and gloss retention when immersed in hot water.

Example 10

A polyester product was prepared by charging 75.2 grams (0.43 mole) of 2-ethyl-3-propyl-1,5-pentanediol, 3.5 grams (0.026 mole) of trimethylolpropane, 16.2 grams (0.10 mole) of isophthalic acid, 14.3 grams (0.10 mole) of adipic acid, and 0.22 grams (0.2 weight percent) dibutyltin oxide catalyst to a four-necked, one-liter round bottom flask equipped with a mechanical stirrer, thermometer, nitrogen sparging tube, and a simple distillation head. During the reaction, the ingredients were kept under a nitrogen sparge with stirring. The system was gradually heated to 160 °C over a one-hour period. The temperature was maintained at 160 °C with a Therm-O-Watch controller for one hour, and then the temperature was increased in 10 degree increments every 45 minutes until a reaction temperature of 220 °C was attained. This temperature was maintained for 30 minutes after which the system was allowed to cool to room temperature. All water of condensation formed by the reaction was removed with the simple distillation head. The resulting polyester had a Brookfield viscosity of 5,440 centipoise at 23 °C, a hydroxyl number of 258, and an acid number of 2.23. Molecular weight determination by gel permeation chromatography using a polystyrene standard resulted in an apparent number average molecular weight of 831, a weight-average molecular weight of 1161, and a polydispersity of 1.40.

A composition containing 3.75 grams of the polyester product, 18.5 grams of Epoxide I, 2.125 grams of Vinyl Ester II, 0.125 grams of Surfactant III, and 0.50 grams of Photoinitiator I was placed in an amber

bottle, well mixed and cured on phosphatized steel and on cleaned Y test pattern boards as described below.

A portion of the composition was coated onto Bonderite 37 steel with a No. 20 wire-wound rod, cured with one pass under a 300 watt-per-inch medium pressure mercury vapor lamp (American Ultraviolet Company equipment) at 30 feet-per-minute to form a cured coating.

Another portion of the composition was coated onto a Y test pattern printed circuit board by first cleaning the board with a detergent solution and a soft brush, rinsing the board several times with distilled water while lightly scrubbing with a soft brush, and then rinsing with acetone. The board was dried in a circulating-air oven at 65 °C for 30 minutes. The resistance gap between the Y pattern was coated by pouring the coating composition over just the Y pattern of the Y test pattern board (i.e., most of the board was not coated) and cured with one pass under a 300 watt-per-inch medium pressure mercury vapor lamp (American Ultraviolet Company equipment) at 30 feet-per-minute to form a cured coating. After ultraviolet light exposure, the insulation resistance of the cured coating was measured at various times while remaining at room temperature (67 °C) and humidity conditions which were high but not measured and which varied from day to day.

The cured coating passed 100 acetone double rubs, had 100 percent crosshatch adhesion, and a 2H hardness on the steel substrate. On the Y-pattern test board the insulation resistance was 40 x $10^{12}$ ohms.

Although the invention has been illustrated by certain of the preceding examples, it is not to be construed as being limited thereby; but rather, the invention encompasses the generic area as hereinbefore disclosed. Various modifications and embodiments can be made without departing from the spirit and scope thereof.

Related Applications

The following are related, commonly assigned applications, filed on an even date herewith:

U.S. Patent Application Serial No. 790,872 (D-16841); U.S. Patent Application Serial No. 790,873 (D-16842); U.S. Patent Application Serial No. 790,896 (D-16843); U.S. Patent Application Serial No. 790,874 (D-16844); and U.S. Patent Application Serial No. 790,895 (D-16845); all of which are incorporated herein by reference.

## Claims

**1.** A polyester comprising the reaction product of (i) a liquid hydrocarbon diol comprised of primary hydroxyl groups and 8 or more carbon atoms in which the primary hydroxyl groups are separated by 4 or more carbon atoms linearly arranged and in which at least one of said carbon atoms linearly arranged is a disubstituted carbon atom or at least 2 of said carbon atoms linearly arranged are monosubstituted carbon atoms, said liquid hydrocarbon diol existing as a liquid at a temperature of 35 °C or less, and/or a derivative of said liquid hydrocarbon diol, provided when said polyester is an unsaturated polyester, then said liquid hydrocarbon diol is other than 2,4-diethyl-3-propyl-1,5-pentanediol, and (ii) a polyfunctional carboxylic acid and/or an acid anhydride.

**2.** The polyester of claim 1 further comprising a polyol different from said liquid hydrocarbon diol or derivative thereof.

**3.** The polyester of claim 1 wherein the liquid hydrocarbon diol is represented by one of the following formulae:

HO - R' - OH (I)

wherein R' is a substituted hydrocarbon residue having 8 or more carbon atoms in which the primary hydroxyl groups are separated by 4 or more carbon atoms linearly arranged and in which at least one of said carbon atoms linearly arranged is a disubstituted carbon atom or at least 2 of said carbon atoms linearly arranged are monosubstituted carbon atoms; or

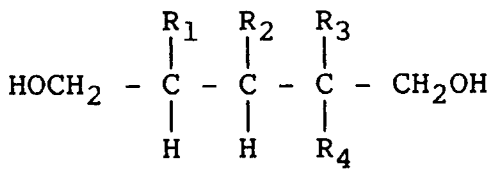

(II)

wherein $R_1$ is hydrogen or linear or branched alkyl having from 1 to 3 carbon atoms, and $R_2$, $R_3$ and $R_4$ are the same or different and are hydrogen or linear or branched alkyl having from 1 to 4 carbon atoms; or

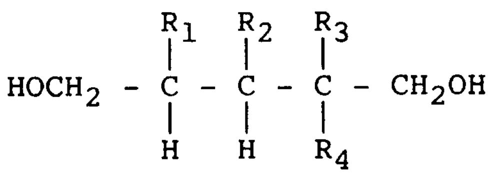

(III)

wherein $R_1$ is hydrogen or linear or branched alkyl having from 1 to 3 carbon atoms, and $R_2$, $R_3$ and $R_4$ are the same or different and are hydrogen or linear or branched alkyl having from 1 to 4 carbon atoms; provided (a) at least 2 of $R_1$, $R_2$, $R_3$ and $R_4$ are other than hydrogen; (b) the total number of carbon atoms in $R_1$, $R_2$, $R_3$ and $R_4$ together is 5 or more except as follows: (i) when $R_2$ is ethyl and one of $R_1$, $R_3$ and $R_4$ is methyl, then the remaining 2 of $R_1$, $R_3$ and $R_4$ can be hydrogen; (ii) when $R_3$ and $R_4$ are independently methyl and propyl, then $R_1$ and $R_2$ can be hydrogen; and (iii) when $R_1$ is methyl and $R_2$ is ethyl and one of $R_3$ and $R_4$ is methyl, then the remaining $R_3$ or $R_4$ can be hydrogen; (c) when the total number of carbon atoms in $R_1$ and $R_2$ is 4 or more, then the total number of carbon atoms in $R_2$ is 3 or less except when $R_1$ is propyl and $R_3$ and $R_4$ are hydrogen, then $R_2$ can be butyl; and (d) when $R_1$ is ethyl and $R_2$ is propyl, then $R_3$ is other than ethyl.

**4.** The polyester of claim 1 in which the liquid hydrocarbon diol is selected from 3-ethyl-2-methyl-1,5-pentanediol, 2-ethyl-3-propyl-1,5-pentanediol, 2,4-dimethyl-3-ethyl-1,5-pentanediol, 2-ethyl-4-methyl-3-propyl-1,5-pentanediol, 2,3-diethyl-4-methyl-1,5-pentanediol, 3-ethyl-2,2,4-trimethyl-1,5-pentanediol, 2,2-dimethyl-4-ethyl-3-propyl-1,5-pentanediol, 2-methyl-2-propyl-1,5-pentanediol, 2,4-dimethyl-3-ethyl-2-propyl-1,5-pentanediol, 2,3-dipropyl-4-ethyl-2-methyl-1,5-pentanediol, 2-butyl-2-ethyl-1,5-pentanediol, 2-butyl-2,3-diethyl-4-methyl-1,5-pentanediol, 2-butyl-2,4-diethyl-3-propyl-1,5-pentanediol, 3-butyl-2-propyl-1,5-pentanediol, and mixtures thereof.

**5.** The polyester of claim 1 wherein the polyfunctional carboxylic acid is selected from oxalic acid, malonic acid, succinic acid, glutaric acid, adipic acid, pimelic acid, suberic acid, azelaic acid, sebacic acid, undecanedioic acid, dodecanedioic acid, tridecanedioic acid, maleic acid, fumaric acid, 2-methyl-cis-2-butenedioic acid, 2-methylenesuccinic acid, 1,1-cyclobutanedicarboxylic acid, norcamphoric acid, tetrahydrophthalic acid, methyltetra-hydrophthalic acid, 1,1-cyclohexanedicarboxylic acid, hexahydrophthalic acid, 1,4-cyclohexanedicarboxylic acid, chlorendic acid, 1,4-benzenediacetic acid, phthalic acid, isophthalic acid, trimellitic acid, and mixtures thereof; and the acid anhydride is selected from trimellitic anhydride, tetrahydrophthalic anhydride, phthalic anhydride, isophthalic anhydride, benzophenone dicarboxylic acid anhydride, succinic anhydride, glutaric anhydride, napthoic anhydride, clorendic anhydride, maleic anhydride, and mixtures thereof.

**6.** The polyester of claim 1 represented by the formula:

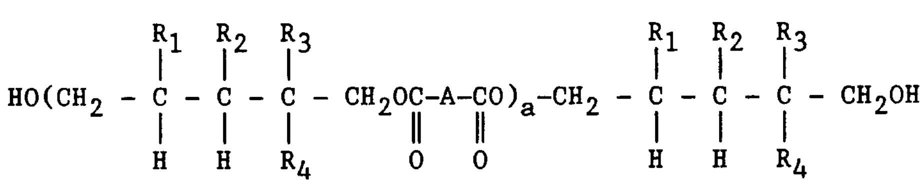

wherein $R_1$ is the same or different and is hydrogen or linear or branched alkyl having from 1 to 3 carbon atoms, $R_2$, $R_3$ and $R_4$ are the same or different and are hydrogen or linear or branched alkyl having from 1 to 4 carbon atoms, A is the same or different and is a substituted or unsubstituted hydrocarbon residue, and a is a value of from about 1 to about 300 or greater.

**7.** A process for preparing a polyester which comprises condensing a liquid hydrocarbon diol comprised of primary hydroxyl groups and 8 or more carbon atoms in which the primary hydroxyl groups are separated by 4 or more carbon atoms linearly arranged and in which at least one of said carbon atoms linearly arranged is a disubstituted carbon atom or at least 2 of said carbon atoms linearly arranged are monosubstituted carbon atoms, said liquid hydrocarbon diol existing as a liquid at a temperature of 35°C or less, and/or a derivative of said liquid hydrocarbon diol, provided when said polyester is an unsaturated polyester, then said liquid hydrocarbon diol is other than 2,4-diethyl-3-propyl-1,5-pentanediol, with a polyfunctional carboxylic acid and/or an acid anhydride to form said polyester.

**8.** A curable coating composition comprising the polyester of claim 1 and a crosslinking agent.

**9.** A cured film prepared from the coating composition of claim 8.

**10.** An adhesive, ink or sealant composition or a fiber comprising the polyester of claim 1 and a crosslinking agent.

European Patent Office

# EUROPEAN SEARCH REPORT

Application Number

EP 92 11 9271

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 333 839 (DYNAMIT NOBEL AG)<br>* Claim 1; page 3, lines 16-40 * | 1-3,5,7-9 | C 08 G 63/16<br>C 08 G 63/52<br>C 09 D 167/00<br>C 09 J 167/00<br>C 09 K 3/10<br>C 09 D 11/00<br>D 01 F 6/92 |
| X | PATENT ABSTRACTS OF JAPAN, vol. 14, no. 403 (C-0753), 31st August 1990; & JP-A-2 150 416 (MITSUBISHI KASEI VINYL CO.) 08-06-1990<br>* Abstract * | 1-3,5,7 | |
| X | EP-A-0 271 789 (BASF AG)<br>* Abstract; page 3, line 20 - page 5, line 51 * | 1-3,5,7 | |
| X | DE-B-1 029 147 (BAYER AG)<br>* Whole document * | 1-3,5,7 | |
| X | POLYMER BULLETIN, vol. 22, no. 4, October 1989, pages 379-386, Berlin, DE; B. GORDON III et al.: "Synthesis and characterization of 2,3-dialkyl-1,4-butanediols and copolyesters containing these moieties"<br>* Pages 383-384 * | 1-3,5,7 | **TECHNICAL FIELDS SEARCHED (Int. Cl.5)** |
| X | US-A-3 296 211 (J. WINKLER et al.)<br>* Column 1, line 40 - column 2, line 68; column 3, line 61 - column 4, line 34 *<br>--- -/- | 1-3,5,7 | C 08 G<br>C 09 D |

The present search report has been drawn up for all claims

| Place of search | Date of completion of the search | Examiner |
|---|---|---|
| THE HAGUE | 26-03-1993 | KRISCHE D H T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

European Patent Office

# EUROPEAN SEARCH REPORT

Application Number

EP 92 11 9271

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 861 981 (C.E. FRANK et al.) * Claims 1,7; examples 6,8; column 2, lines 36-50 * | 1-3,5,7 | |
| A | US-A-4 067 849 (R.C. CHANG) * Claims 1-5 * | 1-3,5,7 | |

TECHNICAL FIELDS SEARCHED (Int. Cl.5)

The present search report has been drawn up for all claims

| Place of search | Date of completion of the search | Examiner |
|---|---|---|
| THE HAGUE | 26-03-1993 | KRISCHE D H T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)